Europäisches Patentamt

European Patent Office

Office européen des brevets

(11) Publication number: **0 257 009 B1**

## EUROPEAN PATENT SPECIFICATION

(45) Date of publication of patent specification: **17.06.92**   (51) Int. Cl.⁵: **B29C  45/24**, B01D 29/50

(21) Application number: **87850243.4**

(22) Date of filing: **12.08.87**

(54) **Injection molding filter.**

(30) Priority: **12.08.86 US 895836**

(43) Date of publication of application:
**24.02.88 Bulletin  88/08**

(45) Publication of the grant of the patent:
**17.06.92 Bulletin  92/25**

(84) Designated Contracting States:
**AT BE CH DE ES FR GB IT LI NL SE**

(56) References cited:
**FR-A- 763 972**
**US-A- 3 767 056**
**US-A- 3 947 202**

(73) Proprietor: **A-1 ENGINEERING, INC.**
**9506 Foley Boulevard**
**Coon Rapids Minnesota 55433(US)**

(72) Inventor: **Neumann, Clayton L.**
**11440 N. W. Olive Street**
**Coon Rapids Minnesota 55433(US)**

(74) Representative: **Ström, Tore et al**
**Ström & Gulliksson AB Studentgatan 1 P.O.**
**Box 4188**
**S-203 13 Malmö(SE)**

## Description

The invention broadly relates to filtering apparatus, according to the preamble of claim 1, and is specifically directed to an improved apparatus for filtering a flow of melted plastic to be used in an injection molding system.

Plastic injection molding systems require a smooth flow of filtered plastic in order to produce articles of optimum quality. Filtering devices for the hot plastic melt are well known in the prior art, and all are subjected to extreme environmental conditions due to the viscosity of the plastic, the elevated temperature at which it must operate to maintain the plastic in a proper melted flow, and the extreme pressures necessary to inject the plastic into the mold.

A typical temperature range is 177°C-399°C (350°F.-750°F.); operating pressures can reach and exceed 206843000 N/m² (30,000 psi). Filtering devices for injection molding systems must therefore be formed from materials capable of withstanding such elevated temperatures and extremely high pressures. An exemplary injection molding filter is disclosed in U.S. Patent No. 3,767,056, which issued on October 23, 1973 in the name of Gordon E. Neuman, which is assigned to the same assignee as this invention. The patent discloses a filter consisting of a housing having a cylindrical internal chamber alignably disposed between an axial inlet and outlet. A tubular filter element is mounted at each end to the housing, which includes a plurality of radially extending filter openings in its tubular side wall. The diameter of the filter element is smaller than the diameter of the internal chamber, thus defining an annular discharge passage for the filtered plastic. A rotatable valve member projects transversely through the filter element at its outlet end. In its closed position, it blocks the end of the filter element, forcing the unfiltered plastic through the filter openings for discharge through the annular passage and outlet. In the open position, the valve permits plastic to flow through the inlet, tubular filter element, valve opening and directly through the outlet for purging purposes.

The injection molding filter of U.S. Patent No. 3,767,056 provides excellent plastic filtering results. However, the purge valve, which necessarily traverses the annular discharge chamber as well as the filter element, acts as an obstruction to output flow. Further, removal of the filter element for maintenance or replacement requires the removal of several components.

The plastic filter device of this invention, according to the characterising part of claim 1, is the result of an endeavor to improve the apparatus of U.S. Patent No. 3,767,056. It also includes a housing with a cylindrical internal chamber alignably disposed between an axial inlet and outlet. A tubular filter element including a plurality of radially extending filter openings is threadably mounted only at its inlet, end to the housing in surrounding relation to the inlet, and projects axially toward the outlet in cantilever fashion. An annular discharge passage is defined between the outside diameter of the tubular filter element and inside diameter of the internal chamber.

A threaded plug closes the outlet end of the tubular element, forcing melted plastic radially outward through the filter openings into the annular discharge passage. The length of the filter element is such that the filtered fluid may converge from the annular discharge passage around the end of the tubular filter element and into the outlet. The threaded plug tapers to a point to facilitate this smooth, continuous flow.

Because the tubular filter element is mounted only at its inlet end in a threaded manner, it is possible for the flow of melted plastic operating under extremely high pressure to produce torsional forces that tend to unscrew and loosen the filter element from its threaded mount. To avoid this, the filter element is provided with a plurality of spiral surfaces extending in a direction so that, when exposed to the flow of plastic, a resultant force is created that tends to tighten the tubular filter element into its threaded mount. These spiral surfaces are preferably formed in the inner cylindrical surface of the tubular filter element as its inlet end and on the tapered surface of the threaded plug at the outlet end.

The improved structure defines a flow path for the plastic that is unobstructed in all respects with the exception of the filter openings themselves. The filter openings are advantageously constructed to permit the placement of a substantial number of openings without weakening the filter element. The element itself can be easily removed from the outlet end of the housing for maintenance or replacement, but due to the spiral surfaces, it will not loosen during operation of the system.

Additional structural advantages and features of the improved plastic filtering apparatus will become apparent from the specification and attached drawings.

Brief Description of the Drawings

Figure 1 is a sectional view in side elevation of filtering apparatus embodying the invention;
Figure 2 is an enlarged sectional view in side elevation of a filter element for the filtering apparatus;
Figure 3 is a further enlarged fragmentary sectional view of the filter element, showing in particular the structural detail of the filtration openings;

Figure 4 is an enlarged fragmentary end view of an end plug for the filter element as seen from line 4-4 of Figure 1; and

Figure 5 is an enlarged fragmentary end sectional view of the filter element taken along the line 5-5 of Figure 1.

Description of the Preferred Embodiment

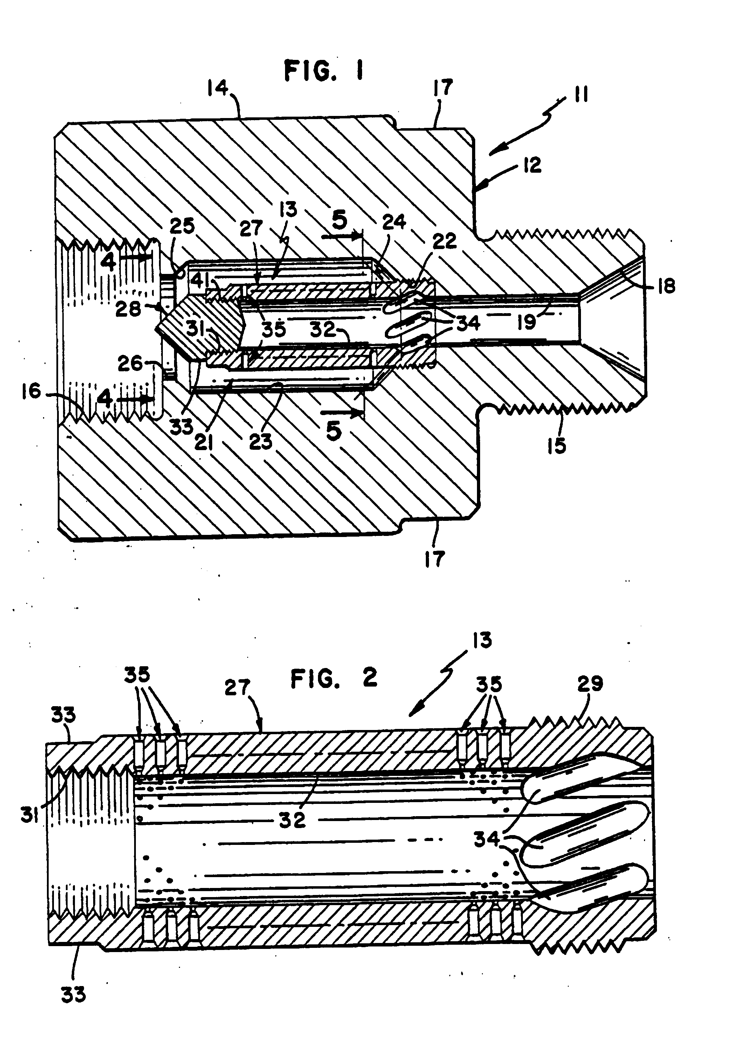

With initial reference to Figure 1, an improved filtering device for use in high pressure plastic injection molding apparatus is represented generally by the numeral 11. Device 11 broadly comprises a housing bearing the general reference numeral 12 and a filter element bearing the general reference numeral 13.

Housing 12 in the preferred embodiment comprises a steel member having a cylindrical outer surface 14 with an axially extending threaded projection 15 at one end and a threaded recess 16 at the axially opposite end. The threaded projection 15 and threaded recess 16 permit the filter 11 to be mounted in line within a plastic injection molding system. To facilitate such mounting, a plurality of flats 17 are formed on the external surface of the housing 12, permitting it to be wrenched into place.

Housing 12 is formed with a number of axial bores of different size, length and configuration that together define a flow path for the melted plastic. A flared or tapered bore 18 extending axially inward from the end of threaded projection 15 defines an inlet for the filter device 11. This leads to a smaller straight circular inlet bore 19 that leads to an internal chamber bearing the general reference numeral 21. At one end of the internal chamber 21 is a threaded bore 22 that is larger in diameter than the straight bore 19. The internal chamber 21 is primarily defined by a large circular bore 23 that is further defined at each end by 45° steps 24, 25. A short circular bore 26 establishes communication between the internal chamber 21 and the threaded recess 16, the latter of which also serves as an outlet for the filter device 11.

In the preferred embodiment, the bores 18, 19, 23-26 and threaded recess 16 are formed on the axis of the cylindrical housing 12 and establish a predetermined flow of melted plastic therethrough.

With continued reference to Figure 1 and additional reference to Figure 2, filter element 13 broadly comprises a tubular member bearing the general reference numeral 27, which has an open inlet end and an outlet end closed by an end plug (Figure 1 only) bearing the general reference numeral 28, and which is described in further detail below.

Tubular member 27 is preferably of circular cross section with an annular wall of predetermined thickness. The inlet end of tubular member 27 is formed with an external threaded portion 29 that mates with the threaded bore 22 in surrounding relation to the inlet bore 19. A threaded recess 31 at the outlet end of tubular member 27 is adapted to receive the end plug 28.

The axial length of the filter element 13, including both the tubular member 27 and end plug 28 occupies the entirety of the internal chamber 21, projecting just into the threaded recess 16. The outside diameter of tubular member 27 is less than the diameter of bore 23, leaving an annular passage therebetween to accommodate the flow of melted plastic after it has passed through the filter element.

Tubular member 27 has an internal bore 32 that is continuous over its length from the inlet to the threaded outlet, and which corresponds dimensionally to the inlet bore 19 in housing 12. This permits the unfiltered melted plastic to flow smoothly through the inlet bore 19 into the filter element 13.

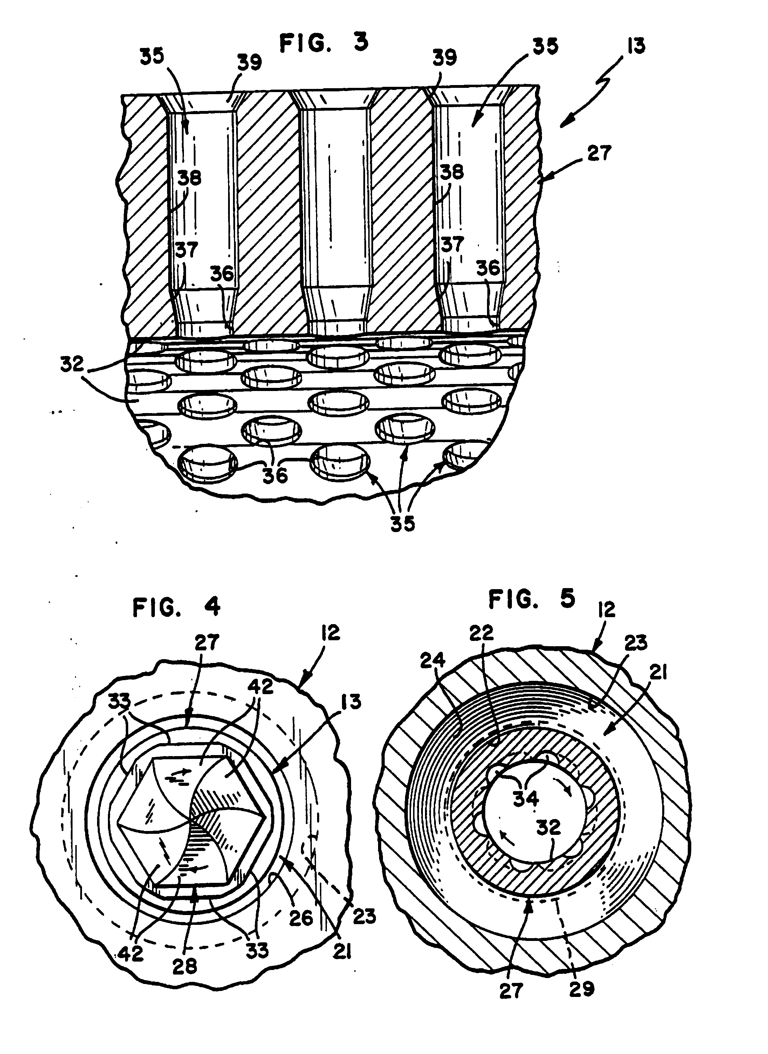

Tubular member 27 further comprises a plurality of external flats 33 at the outlet end that together define a hexagonal surface (see also Figure 4) permitting the tubular member 27 to be wrench tightened when it is screwed into the threaded bore 22.

The threads of the threaded bore 22 and external threaded portion 29 are formed with a conventional righthand thread in the preferred embodiment; i.e., when viewed from its outlet end, tubular member 27 is screwed into place with clockwise rotation. To insure that the filter element 13 is maintained in this threaded mounting position, a number of spiral surfaces 34 are formed in the inner cylindrical surface of bore 32 at the inlet end of tubular member 27; i.e., in the region of the threaded portion 29. In the preferred embodiment, and as additionally shown in Figure 5, the spiral surfaces 34 specifically take the form of grooves with rounded bottoms extending in a clockwise direction when viewed along the axis of tubular member 27. The essential function of spiral surfaces 34 is to present to the flow of melted plastic surfaces that are not parallel to the established direction of plastic flow (which is axial in this region), and to generate as the result of the plastic flowing against this surface a force that maintains the filter element 13 in its threaded mounting position. More specifically, when the flow of melted plastic under extremely high pressure engages these spiral surfaces 34, the fact that the surfaces 34 are angularly disposed relative to the line of plastic flow creates a force at any given point having a force component that tends to move the tubular member 27 in a clockwise direction, which tends to tighten the member 27 in place.

The direction in which the spiral surfaces 34 extend obviously is chosen based on the thread direction of the threaded bore 22 and external threaded portion 29 to produce forces that screw the tubular element 27 into its mounting position.

With continued reference to Figures 2 and 3, a plurality of filtration openings formed through the annular wall of tubular member 27 are represented by the general reference numeral 35. In the preferred embodiment, the filtration openings are formed in rows that extend both axially and circumferentially, and as best shown in Figure 3, the openings 35 are staggered or offset in alternate rows to produce a uniform pattern extending over a substantial portion of the length of the tubular member 27.

With specific reference to Figure 3, each of the filtration openings 35 comprises an inlet bore 36 that opens on the internal cylindrical surface and is of predetermined size. The inlet bore 36 leads to an angularly stepped diverging bore 37 of increasing size that establishes a transition to a larger straight circular bore 38. An angularly flared diverging bore 39 leads from the bore 38 to the outer surface of tubular member 27 and serves as an outlet for the filtration opening 35.

This specific construction of each of the filtration openings forms two primary functions. First, since the inlet bore 36 is smaller in size than any of the bores 37-39, any material that enters the bore 36 will leave the filtration opening 35. Stated otherwise, it is not possible for particulate matter to enter one of the filtration openings 35 and to thereafter clog the bore.

The second function of the specific construction of filtration openings 35 is to provide a sufficient number of divergent openings without significantly decreasing the mass of the filter element. For example, it is possible for a divergent filtration opening to taper outward from the inlet to the outlet, but due to the necessary taper for such construction, the size of the outlet utilizes a significant amount of the external surface and mass of the element. U.S. Patent No. 3,767,056 discloses such filtration openings. However, by structuring the filtration opening to include a large straight bore 38 in communication with the smaller inlet 36 and larger outlet 39, a lesser external surface area is used while accomplishing the desired function of the tapered filtration opening. As a result, a lesser mass of the filter element is used with the same number of filtration openings without weakening the filter element.

With reference to Figures 1 and 4, end plug 28 comprises a rearward threaded projection 41 that mates with the threaded recess 31 and tubular member 27, and a forwardly projecting head that tapers to a point. The tapered portion is generally conical, and its angular surface is disposed in parallel relation to the stepped bore 25 to establish a nonrestrictive passage of substantially uniform size. The tapered portion of the head is formed with a plurality of spiral surfaces 42 that, although of a different configuration, perform the same function as the spiral surfaces or grooves 34. The spiral direction of the surfaces 42 is based on the thread direction of the threaded recess 31 and threaded projection 41 which, in the preferred embodiment, are also righthand threads. Accordingly, when the melted plastic surrounds the end plug 28, the spiral surfaces 42 generate a force that is clockwise as viewed in Figure 4, as indicated by the directional arrows. This serves to maintain the end plug in tight threaded engagement with the tubular member 27, and also assists the spiral grooves 34 in maintaining the tubular member 27 in its threaded mounting position.

In operation, and with the filter device 11 mounted in line in an injection molding system, hot melted plastic enter the inlet 18 under pressure which can equal an exceed 206843000 N/m$^2$ (30,000 psi). The melted plastic flows through the bore 19 and into the tubular member 27, where further forward axial movement is stopped by the end plug 28. The melted plastic is then forced radially outward through the system of filtration openings 35 and into the annular passage surrounding the filter element 13. From this annular passage, it moves forward around the end plug 28 into and out of the outlet for use in the injection mold.

In the conventional injection molding system, the supply of hot melted plastic to the mold is intermittent, since flow must stop momentarily while the mold is closed and the molded article hardens. While the plastic is moving through the filter device 11, the flow engages both the spiral surfaces 34 and 42, and as described above, forces result that tend to tighten the filter element 13 in its threaded mounted position. Thus, the intermittent supply of hot melted plastic cannot cause the filter element to unscrew or become loosened, as is possible with prior art devices.

After a period of time, the filter element 13 requires purging of the particulate matter and contaminants that cannot pass into and through the filter openings 35. This is easily accomplished by first removing the end plug 28 by access through the outlet 31. At this point, inlet plastic may be permitted to flow directly through the filter element 13 to remove the filtrate, or a rod having an outside diameter approximating the internal diameter of tubular member 27 may be introduced through the inlet 18 and inlet bore 19, which acts as a plunger to quickly remove all contaminants and particulate matter.

The specific construction of the filter device 11 is beneficial in other respects. For example, the fact that the filter element 13 is threadably mounted from its inlet end in a cantilever manner results in a flow of melted plastic that is never obstructed except by the filter element itself, thus insuring smooth, continuous flow. This is extremely important because any obstruction in the plastic flow can cause stagnation, resulting in the formation of particulate matter within the flow stream, degradation of the plastic melt and an end product of lesser quality.

It will also be observed that this smooth, continuous flow is enhanced by the annular chamber surrounding the tubular member 27 as it converges into the outlet. This is the result of the stepped bore 25 and its substantially parallel relationship with the tapered portion of end plug 28, as shown in Figure 1.

The inventive filter device 11 thus insures a smooth, continuous flow of filtered plastic to the injection mold, and maintains the filter element 13 in a tight threaded mounting position in all phases of operation.

**Claims**

1. Apparatus for filtering a flow of fluid including a housing (12) having an inlet (18) of predetermined cross sectional size for receiving unfiltered fluid, an outlet (16) of predetermined cross sectional size for discharging filtered fluid, and the housing (12) further defining an internal chamber (21) aligned between the inlet (18) and outlet (16), a filter element (13) comprising a tubular body (27) with an annular wall of predetermined thickness, the tubular body (27) having a first open inlet end, a second closed end (28) and a plurality of filter openings (35) extending through said annular wall, characterized in:

   mounting means (22, 29) for mounting the open end of the tubular body (27) to the housing (12) with said open end in fluid communication with said inlet (18) and said tubular body (27) extending in cantilever fashion towards the outlet (16) in alignment therewith, said second closed end (28) being unengaged within said internal chamber (21);

   said tubular body (27) and internal chamber (21) being relatively sized to define a passage therebetween that is disposed in fluid communication with said outlet (16), and through which filtered fluid flows as it leaves the filter openings (35); and

   the tubular body (21) having a cross sectional size less than that of the housing outlet (16) to permit access to the tubular body (27) through the housing outlet (16).

2. The apparatus defined by claim 1, wherein the inlet (18), outlet (16), internal chamber (21) and tubular body (27) are disposed on a common axis.

3. The apparatus defined by claim 2, wherein the inlet (18), outlet (16) and internal chamber (21) comprise cylindrical bores, and the tubular body (27) is of circular and annular cross section.

4. The apparatus defined by claim 3, wherein the mounting means comprises an externally threaded portion (29) on the first open inlet end of the tubular body (27), and a threaded recess (22) in said housing (12) in surrounding relation to said inlet.

5. The apparatus defined by claim 1, wherein each of said filter openings (35) has an inlet (36) on the inner surface of said tubular body (27) and an outlet (39) on the outer surface of said tubular body (27), said outlet (39) being larger than said inlet (36).

6. The apparatus defined by claim 5, wherein each filter opening (35) further comprises a straight bore (38) disposed in axial alignment with said inlet (36) and outlet (39), a diverging transition bore (37) between the inlet (36) and straight bore (38), and a diverging transition bore between the straight bore (38) and the outlet (39).

7. The apparatus defined by claim 3, wherein the filter openings (35) are disposed in a plurality of circumferential and axial rows.

8. The apparatus defined by claim 7, wherein the rows of filter openings (35) are alternately staggered.

**Revendications**

1. Dispositif pour filtrer un écoulement de fluide comprenant un logement (12) ayant un orifice d'entrée (18) de dimensions en section transversale prédéterminées pour recevoir un fluide non filtré, un orifice de sortie (16) de dimensions en section transversale prédéterminées pour décharger le fluide filtré, et le logement (12) définissant en outre une chambre interne (21) disposée en alignement entre l'orifice d'entrée (18) et l'orifice de sortie (16), un élément filtrant (13) comportant un corps tubulaire (27) avec une paroi annulaire d'une épaisseur prédéterminée, le corps tubulaire (27) ayant une première extrémité d'entrée ouverte, une seconde extrémité fermée (28) et une multitude d'ouvertures (35) de filtre s'étendant à travers ladite paroi annulaire, caractérisé par :

- un moyen de montage (22, 29) pour monter l'extrémité ouverte du corps tubulaire (27) sur le logement (12) avec ladite ouverture ouverte en communication fluidique avec ledit orifice d'entrée (18) et ledit corps tubulaire (27) s'étendant à la façon d'un porte-à-faux vers l'orifice de sortie (16) en alignement avec lui, ladite seconde extrémité fermée (28) n'étant pas engagée dans ladite chambre interne (21); en ce que

- lesdits corps tubulaires (27) et chambre interne (21) sont dimensionnés l'un par rapport à l'autre de manière à définir un passage entre eux qui est disposé en communication fluidique avec ledit orifice de sortie (16), et par l'intermédiaire duquel le fluide filtré s'écoule alors qu'il quitte les ouvertures (35) du filtre; et

- le corps tubulaire (27) présente des dimensions en section transversale inférieures à celles de l'orifice de sortie (16) du logement pour permettre l'accès au corps tubulaire (27) par l'intermédiaire de l'orifice de sortie (16) du logement.

2. Dispositif selon la revendication 1, dans lequel l'orifice d'entrée (18), l'orifice de sortie (16), la chambre interne (21) et le corps tubulaire (27) sont disposés sur un axe commun.

3. Dispositif selon la revendication 2, dans lequel l'orifice d'entrée (18), l'orifice de sortie (16) et la chambre interne (21) comprennent des alésages cylindriques, et le corps tubulaire (27) présente une section transversale circulaire et annulaire.

4. Dispositif selon la revendication 3, dans lequel le moyen de montage comprend une portion filetée extérieurement (29) sur la première extrémité d'entrée ouverte du corps tubulaire (27) et un évidement fileté (22) dans ledit logement (12) qui entoure ledit orifice d'entrée.

5. Dispositif selon la revendication 1, dans lequel chacune desdites ouvertures (35) du filtre comporte un orifice d'entrée (36) sur la surface intérieure dudit corps tubulaire (27) et un orifice de sortie (39) sur la surface extérieure dudit corps tubulaire (27), ledit orifice de sortie (39) étant plus grand que ledit orifice d'entrée (36).

6. Dispositif selon la revendication 5, dans lequel chaque ouverture (35) du filtre comprend en outre un alésage rectiligne (38) disposé en alignement axial avec lesdits orifice d'entrée (36) et orifice de sortie (39), un alésage de transition divergent (37) entre l'orifice d'entrée (36) et l'alésage rectiligne (38), un alésage de transition divergent entre l'alésage rectiligne (38) et l'orifice de sortie (39).

7. Dispositif selon la revendication 3, dans lequel les ouvertures (35) du filtre sont disposées dans une multitude de rangées circonférentielles et axiales.

8. Dispositif selon la revendication 7, dans lequel les rangées et les ouvertures (35) du filtre sont alternativement en quinconce.

**Patentansprüche**

1. Vorrichtung zum Filtern eines Fluidstroms, umfassend ein Gehäuse (12) mit einem Einlaß (18) einer vorbestimmten Querschnittsgröße zum Aufnehmen ungefilterten Fluids, (und) einem Auslaß (16) einer vorbestimmten Querschnittsgröße zum Austragen gefilterten Fluids, wobei das Gehäuse (12) ferner eine zwischen Einlaß (18) und Auslaß (16) ausgefluchtete Innenkammer (21) festlegt, sowie ein Filterelement (13) mit einem rohrförmigen Körper (27) mit einer Ringwand einer vorbestimmten Dikke, wobei der rohrförmige Körper (27) ein erstes, offenes Einlaßende, ein zweites, geschlossenes Ende (28) und eine Vielzahl von die Ringwand durchsetzenden Filteröffnungen (35) aufweist,
dadurch gekennzeichnet, daß
eine Halterungseinrichtung (22,29) zum Haltern des offenen Endes des rohrförmigen Körpers (27) am Gehäuse (12), so daß das offene Ende in Fluidverbindung mit dem Einlaß (18) steht und sich der rohrförmige Körper (27) auskragend in Richtung auf den Auslaß (16) erstreckt und mit diesem ausgefluchtet ist, vorgesehen ist, wobei das zweite geschlossene Ende (28) innerhalb der Innenkammer (21) berührungsfrei oder ungehaltert ist,
der rohrförmige Körper (27) und die Innenkammer (21) relativ zueinander so bemessen sind, daß sie zwischen sich einen Durchgang festlegen, der mit dem Auslaß (16) in Fluidverbindung steht und von dem gefilterten Fluid beim Austreten desselben aus den Filteröffnungen (35) durchströmt wird, und der rohrförmige Körper (27) eine kleinere Querschnittsgröße als der Gehäuse-Auslaß (16) aufweist, um einen Zugang zum rohrförmigen Körper (27) durch den Gehäuse-Auslaß (16) hindurch zu gestatten.

2. Vorrichtung nach Anspruch 1 , dadurch gekennzeichnet, daß der Einlaß (18), der Auslaß (16), die Innenkammer (21) und der rohrförmige Körper (27) auf einer gemeinsamen Achse angeordnet sind.

3. Vorrichtung nach Anspruch 2, dadurch gekennzeichnet, daß der Einlaß (18), der Auslaß (16) und die Innenkammer (21) zylindrische Bohrungen sind und der rohrförmige Körper (27) einen kreisrunden und rohrförmigen Querschnitt aufweist.

4. Vorrichtung nach Anspruch 3, dadurch gekennzeichnet, daß die Halterungseinrichtung einen Außengewindeabschnitt (29) am ersten, offenen Einlaßende des rohrförmigen Körpers (27) und eine den Einlaß umgebende, mit Gewinde versehene Ausnehmung oder Gewindebohrung (22) im Gehäuse (12) umfaßt.

5. Vorrichtung nach Anspruch 1, dadurch gekennzeichnet, daß jede Filteröffnung (35) einen an der Innenfläche des rohrförmigen Körpers (27) liegenden Einlaß (36) und einen an der Außenfläche des rohrförmigen Körpers (27) befindlichen Auslaß (39) aufweist, wobei der Auslaß (39) größer ist als der Einlaß (36).

6. Vorrichtung nach Anspruch 5, dadurch gekennzeichnet, daß jede Filteröffnung (35) ferner eine axial mit Einlaß (36) und Auslaß (39) fluchtende gerade Bohrung (38), eine divergierende Übergangsbohrung (37) zwischen dem Einlaß (36) und der geraden Bohrung (38) sowie eine divergierende Übergangsbohrung zwischen der geraden Bohrung und dem Auslaß (39) aufweist.

7. Vorrichtung nach Anspruch 3, dadurch gekennzeichnet, daß die Filteröffnungen (35) in mehreren umfangsmäßig verlaufenden und axialen Reihen angeordnet sind.

8. Vorrichtung nach Anspruch 7, dadurch gekennzeichnet, daß die Reihen der Filteröffnungen (35) abwechselnd gegeneinander versetzt sind.

## FIG. 1

## FIG. 2

FIG. 3

FIG. 4

FIG. 5